# EUROPÄISCHE PATENTSCHRIFT

(11) **EP 1 575 070 B1**
(45) Veröffentlichungstag und Bekanntmachung des Hinweises auf die Patenterteilung: **13.08.2008**
(21) Anmeldenummer: 05003827.2
(22) Anmeldetag: 23.02.2005
(51) Int. Cl.: H01H 13/70, H02G 3/08

(54) **Eingabegerät eines Installationsgerätes**
Input device for an installation device
Dispositif d'entrée pour un appareil d'installation électrique

(30) Priorität: 10.03.2004 DE 102004011643
(43) Veröffentlichungstag der Anmeldung: 14.09.2005
(73) Patentinhaber: ABB AG, 68309 Mannheim (DE)
(72) Erfinder: Tidden, Matthias, Dipl.-Ing., 58300 Wetter (DE); Jeide, Andreas, Dipl.-Ing., 58769 Nachrodt (DE); Riewe, Jens, Dipl.-Betriebswirt, 58509 Lüdenscheid (DE); Simon, Mirko, Dipl.-Ing., 58533 Halver (DE); Ulbrich, Steffan, Dipl.-Ing., 58579 Schalksmühle (DE); Zapp, Robert, Dipl.-Ing., 58579 Schalksmühle (DE); Goldyn, Dirk, Dipl.-Ing., 58454 Witten (DE); Treude, Hans-Joerg, Dipl.-Ing., 58762 Altena (DE); Poschmann, Thomas, 58566 Kierspe (DE); Nöckel, Holger, 58566 Kierspe (DE)

(56) Entgegenhaltungen:
- DE-A1- 4 418 255
- DE-A1- 19 737 907
- US-A- 5 351 066
- US-A- 5 388 921
- US-A- 5 732 928
- US-B1- 6 579 022

## Beschreibung

Die Erfindung bezieht sich auf ein Eingabegerät eines Installationsbussystems mit mindestens einem Tastsensor gemäß dem Oberbegriff des Anspruchs 1. Ein derartiges Eingabegerät ist aus der DE 44 18 255 A1 bekannt.

Die Erfindung kann beispielsweise für Unterputz-Tastsensoren verwendet werden, welche als Geräte der Gebäudesystemtechnik elektrische Einrichtungen wie Beleuchtungen, Jalousien usw. über einen Netz-Installationsbus oder EIB-Bus ansteuern.

Aus der DE 44 18 255 A1 ist eine Multifunktions-Fernbedienung mit einem Gehäuse mit einer gegenüber einem Standabschnitt des Gehäuses verschwenk- und aufrichtbaren Anzeigefläche in einem auch zur Eingabe benutzbaren Anzeigenabschnitt des Gehäuses bekannt. Die Anzeigefläche kann mit Mitteln zur Erfassung einer Fingerberührung eines menschlichen Benutzers versehen sein, um Eingaben zur Fernbedienung zu tätigen.

Aus der DE 197 37 907 A1 ist eine Tastschalteranordnung bekannt, welche als Gerät der Gebäudesystemtechnik, d. h. Eingabegerät eines Installationsbussystems verwendet wird und ein oder mehrere Tastschalter mit jeweils einer Betätigungswippe aufweist. Mit den Wippen sind über Betätigungsnocken jeweils zwei Mikroschalter betätigbar, deren Rückstellkraft genutzt ist, um die Wippen in ihrer Ruhelage zu halten. Ausgestaltungen ermöglichen unter anderem eine Schriftfeldbeleuchtung und eine Statusanzeige.

Dabei hat sich herausgestellt, dass sich Probleme bei der Bedienung der Tastschalter ergeben, da die Beschriftung eines Tastschalters nur schlecht entzifferbar ist.

Der Erfindung liegt die Aufgabe zugrunde, ein Eingabegerät eines Installationsbussystems der eingangs genannten Art anzugeben, bei dem die Erkennung von Beschriftungen von Tastsensoren erleichtert ist.

Diese Aufgabe wird in Verbindung mit den Merkmalen des Oberbegriffes erfindungsgemäß durch die im Kennzeichen des Anspruchs 1 angegebenen Merkmale gelöst.

Die mit der Erfindung erzielbaren Vorteile bestehen insbesondere darin, dass sich in geschwenkter, d. h. geöffneter Position des Eingabeelementes eine verbesserte Visualisierung der Tastsensor-Zuordnung ergibt, denn die Beschriftung der Tastsensoren befindet sich in dieser Position in einem Winkel von ungefähr 90° gegenüber dem Betrachter bzw. der bedienenden Person.

Weitere Vorteile sind aus der nachstehenden Beschreibung ersichtlich.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:
- Fig.1: eine perspektivische Sicht auf ein Eingabegerät mit geschwenktem Eingabeelement,
- Fig. 2: eine Sicht auf ein Eingabegerät mit geschwenktem Eingabeelement,
- Fig. 3: eine Seitenansicht eines Eingabegerätes mit geschwenktem Eingabeelement,
- Fig. 4: eine perspektivische Sicht auf ein Eingabegerät mit einem Eingabeelement in geschlossener Position.

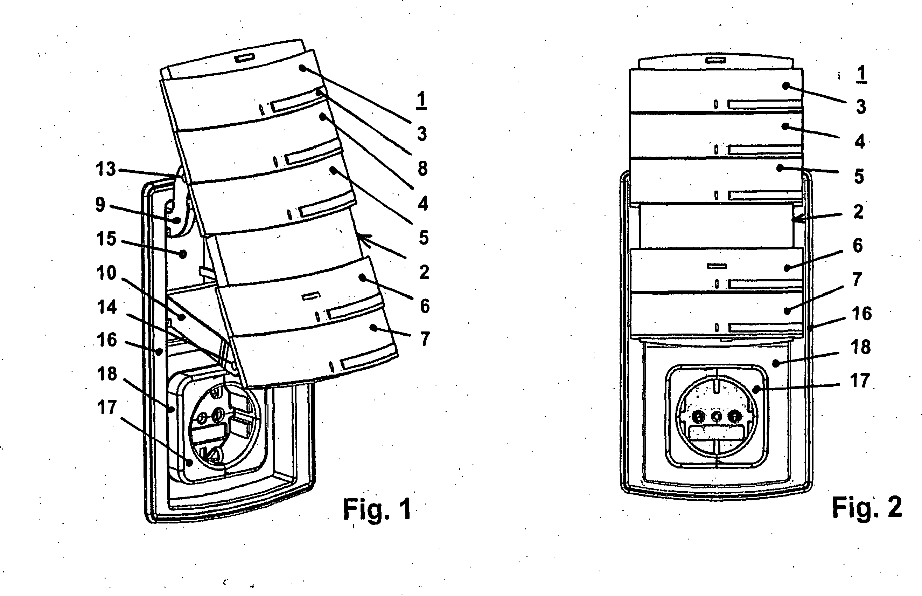

In Fig. 1 ist eine perspektivische Sicht auf ein Eingabegerät eines Installationsbusses mit geschwenktem Eingabeelement dargestellt. Es ist ein Eingabegerät 1 zu erkennen, welches ein Eingabeelement 2 mit insgesamt fünf Tastsensoren 3, 4, 5, 6, 7 aufweist. Diese Tastsensoren 3 - 7 dienen zur Betätigung von Mikroschaltern, welche entsprechende Signale an einen Installationsbus (beispielsweise EIB oder Netzbus) abgeben. Vorzugsweise weist jeder Tastsensor 3 - 7 ein Beschriftungsfeld 8 sowie eine Funktionsanzeige (Leuchtdiode) auf.

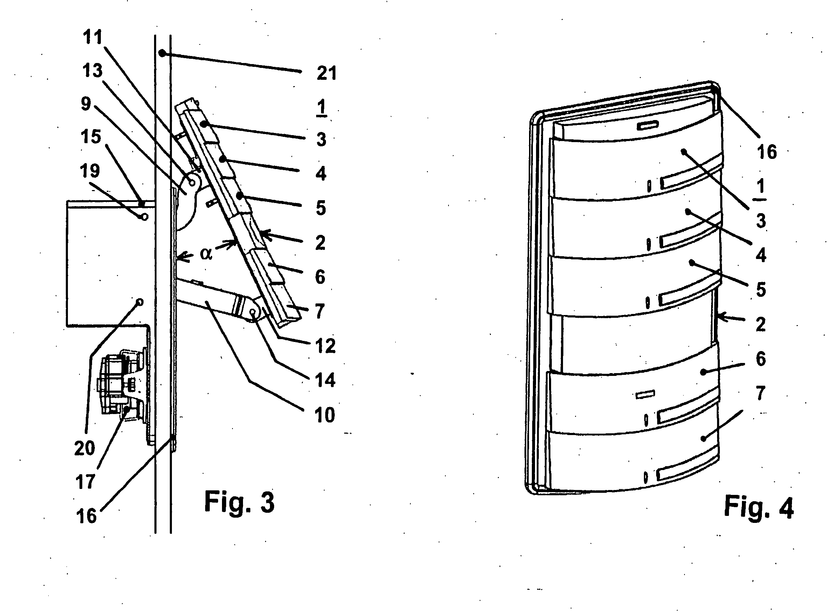

Das Eingabeelement 2 ist über insgesamt vier Schwenkhebel (zwei obere Schwenkhebel und zwei untere Schwenkhebel) mit einem Grundgerät 15 verbunden, welches unter anderem eine Busankopplung enthält. In der Darstellung gemäß Fig. 1 sind ein oberer Schwenkhebel 9 sowie ein unterer Schwenkhebel 10 zu erkennen. Für die Befestigung des oberen Schwenkhebels 9 bzw. des unteren Schwenkhebels 10 ist das Eingabeelement 2 mit Anlenkflächen 11 bzw. 12 (siehe Fig. 3) versehen, welche jeweils ein Gelenk 13 bzw. 14 (jeweils mit Gelenkachse) tragen. Die Befestigung der jeweils weiteren Enden der oberen und unteren Schwenkhebel erfolgt am Grundgerät 15 über entsprechende Gelenke 19 bzw. 20 (jeweils mit Gelenkachsen, siehe Fig. 3).

Das Grundgerät ist in Unterputz-Ausführung gestaltet und weist einen Abdeckrahmen 16 auf. Im unteren Teilabschnitt des Grundgeräts 15 ist eine Steckdose 17 installiert, wobei zwischen Steckdose 17 und Abdeckrahmen 16 eine Ausnehmung 18 ausgebildet ist, welche in geschlossener Position des Eingabeelementes 2 die unteren Schwenkhebel 10 aufnimmt.

In Fig. 2 ist eine Sicht auf ein Eingabegerät 1 mit geschwenktem Eingabeelement dargestellt. Es sind wiederum die Tastsensoren 3 - 7 des Eingabegerätes 2, die im unteren Abschnitt frei zugängliche Steckdose 17, die Ausnehmung 18 für die unteren Schwenkhebel und der Abdeckrahmen 16 zu erkennen.

In Fig. 3 ist eine Seitenansicht eines Eingabegeräts mit geschwenktem Eingabeelement dargestellt. Diese Ansicht zeigt insbesondere die Schwenkhebel-Konfiguration
- mit oberem Schwenkhebel 9, welcher über Gelenk 13 an der Anlenkfläche 11 des Eingabeelementes 2 sowie über Gelenk 19 am Grundgerät 15 befestigt ist,
- mit unterem Schwenkhebel 10, welcher über Gelenk 14 an der Anlenkfläche 12 des Eingabeelementes 2 sowie über Gelenk 20 am Grundgerät 15 befestigt ist.

Fig. 3 zeigt ferner, dass das Eingabegerät 1 in Unterputz-Ausführung ausgebildet ist, wobei das Grundgerät 15 in eine Ausnehmung (Unterputzdose) einer Wand 21 eingreift und sich der Abdeckrahmen 16 an der Wandoberfläche abstützt.

Wie gut aus der Darstellung gemäß Fig. 3 zu erkennen ist, ergeben sich durch das Schwenken des Eingabeelementes 2 nach vorne und oben um den Schwenkwinkel α aus der Vertikalen zwei unterschiedliche Wirkungen:
1. Eine Zugänglichkeit zur Steckdose 17 ist optimal gegeben.
2. Die Oberflächen der Tastsensoren 3 - 7 sind nunmehr ungefähr rechtwinklig zum Gesichtsfeld einer das Eingabegerät 1 bedienenden Person gerichtet, d. h. das Ablesen der Beschriftungsfelder wird hierdurch wesentlich erleichtert.

In Fig. 4 ist eine perspektivische Sicht auf ein Eingabegerät 1 mit einem Eingabeelement in geschlossener Position dargestellt. In dieser Position wird die Steckdose 17 vollständig durch das nunmehr vertikal ausgerichtete Eingabeelement 2 mit den Tastsensoren 3 - 7 abgedeckt.

Wie in den vorstehend erläuterten Fig. 1 - 4 zu erkennen ist, erlaubt das Eingabegerät 1 bezüglich des Eingabeelementes 2 wahlweise zwei unterschiedliche Stellungen:
- Eine geöffnete Position mit vom Grundgerät 15 nach vorne und oben geschwenktem Eingabeelement 2, wobei in dieser Position eine gute Erkennung von Beschriftungsfeldern der Tastsensoren sowie eine freie Zugänglichkeit der Steckdose 17 gegeben ist.
- Eine geschlossene Position mit vollständiger Abdeckung der Steckdose.

Dabei kann ein Wechsel von einer Position in die jeweils andere Position auf unterschiedliche Weise erfolgen:
1. Der Schwenkvorgang wird durch eine im Eingabegerät integrierte Feder bewirkt. Dabei wird entweder durch Betätigung eines Tastsensors (zur Initiierung einer elektrischen Entriegelung) oder durch Druck auf das Unterteil (untere Kante) des Eingabeelements 2 (zur initiierung einer mechanischen Entriegelung) die Schwenkbewegung freigegeben.
2. Der Schwenkvorgang wird motorisch bewirkt. Dabei wird durch Betätigung eines Tastsensors (zur Initiierung des Motorstarts) motorisch das Eingabeelement in die gewünschte Position gebracht. Der Motor befindet sich im Grundgerät 15.

Übliche Schalter und Steckdosen werden in Kombination übereinander oder nebeneinander angeordnet. Eingabegeräte eines Installationsbussystems erlauben wesentlich mehr Funktionen, wie auf einem einzelnen üblichen Schalter abgebildet werden können. Deshalb sind derartige Eingabegeräte eines Installationsbussystems größer als ein üblicher Schalter und benötigen bei senkrechter Montage den Platz von zwei üblichen Schaltern oder einer üblichen Schalter-Steckdosen-Kombination. Wird eine derartige übliche Schalter-Steckdosen-Kombination durch ein solches Eingabegerät eines Installationsbussystems ersetzt, musste bislang üblicherweise die Steckdose entfallen. Da dies in manchen Anwendungsfällen nicht akzeptabel war, ergab sich durch Montage einer Steckdose an benachbarter Stelle ein zusätzlicher Installationsaufwand. Durch Verwendung des vorgeschlagenen Eingabegerätes 1 ergibt sich nunmehr neben dem Vorteil der besseren Visualisierung von Beschriftungsfeldern der zusätzliche Vorteil, dass ein Austausch einer üblichen Schalter-Steckdosen-Kombination gegen ein Eingabegerät eines Installationsbussystems problemlos möglich ist, da die Steckdose erhalten bleiben kann. Durch Schwenken des Eingabeelementes nach oben wird automatisch die im unteren Bereich angeordnete Steckdose zugänglich.

### Bezugszeichenliste:

- 1: Eingabegerät eines Installationsbussystems
- 2: Schwenkbares Eingabeelement
- 3: Tastsensor (zur Betätigung von Mikroschaltern)
- 4: Tastsensor
- 5: Tastsensor
- 6: Tastsensor
- 7: Tastsensor
- 8: Beschriftungsfeld
- 9: obere Schwenkhebel
- 10: untere Schwenkhebel
- 11: Anlenkfläche
- 12: Anlenkfläche
- 13: Gelenk mit Gelenkachse
- 14: Gelenk mit Gelenkachse
- 15: Grundgerät mit Busankopplung
- 16: Abdeckrahmen
- 17: Steckdose
- 18: Ausnehmung zur Aufnahme der unteren Schwenkhebel
- 19: Gelenk mit Gelenkachse
- 20: Gelenk mit Gelenkachse
- 21: Wand

- α: Schwenkwinkel

## Patentansprüche

1. Eingabegerät eines Installationsbussystems mit einem Eingabeelement (2) mit mindestens einem Tastsensor (3, 4, 5, 6, 7), welches mit einem Grundgerät (15) verbunden ist, wobei das Eingabeelement (2) über Schwenkhebel (9, 10) gelenkig mit dem Grundgerät (15) verbunden ist, so dass das Eingabeelement (2) wahlweise in eine geschlossene Position und in eine offene Position mit einem vorgegebenen Schwenkwinkel (α) positionierbar ist, **dadurch gekennzeichnet, dass** das Eingabeelement (2) mit einem Schwenkwinkel (α) gegenüber der vertikalen Stellung positionierbar ist und dass eine Steckdose (17) im unteren Teilabschnitt des Grundgerätes (15) installiert ist, so dass die Steckdose in geschlossener Position durch das Eingabeelement (2) abgedeckt ist und nach Schwenken des Eingabeelements (2) eine Zugänglichkeit zur Steckdose (17) und eine gute Erkennung von Beschriftungsfeldern der Tastsensoren gegeben ist.

2. Eingabegerät nach Anspruch 1, **dadurch gekennzeichnet, dass** das Eingabeelement (2) auf jeder Seite mit einem unteren (10) und einem oberen Schwenkhebel (9) mit dem Grundgerät (15) gelenkig verbunden ist.

3. Eingabegerät nach Anspruch 1 und/oder 2, **dadurch gekennzeichnet, dass** am Grundgerät (15) Ausnehmungen (18) zur Aufnahme von Schwenkhebeln (10) vorgesehen sind.

4. Eingabegerät nach einem der vorstehenden Ansprüche, **dadurch gekennzeichnet, dass** im Grundgerät (15) eine Feder zur Bewirkung des Schwenkvorganges integriert ist.

5. Eingabegerät nach Anspruch 4, dass die Feder durch Druck auf das Unterteil des Eingabeelementes (2) mechanisch entriegelbar ist.

6. Eingabegerät nach Anspruch 5, **dadurch gekennzeichnet, dass** die Feder durch Betätigung eines Tastsensors (3 - 7) elektrisch entriegelbar ist.

7. Eingabegerät nach einem der Ansprüche 1 - 3, **dadurch gekennzeichnet, dass** im Grundgerät (15) ein Motor zur Bewirkung des Schwenkvorganges integriert ist.

8. Eingabegerät nach Anspruch 7, **dadurch gekennzeichnet, dass** die Initiierung eines Motorstarts durch Betätigung eines Tastsensors (4 - 7) erfolgt.

## Claims

1. An input device of an installation bus system, comprising an input element (2) with at least one tactile sensor (3, 4, 5, 6, 7) which is connected with a basic unit (15), with the input element (2) being connected in an articulated manner via a swiveling lever (9, 10) with the basic unit (15), so that the input element (2) can be positioned optionally to a closed position and to an opened position with a predetermined displacement angle (α), **characterized in that** the input element (2) can be positioned with a displacement angle (α) against the vertical position and that a socket outlet (17) is installed in the lower partial section of the basic unit (15), so that the socket outlet is covered in the closed position by the input element (2) and after the swiveling of the input element (2) accessibility to the socket outlet (17) and favorable recognition of labeled fields of the tactile sensors are given.

2. An input device according to claim 1, **characterized in that** the input element (2) is connected in an articulated manner on each side with a bottom (10) and an upper swiveling lever (9) with the basic unit (15).

3. An input device according to claim 1 and/or claim 2, **characterized** that recesses (18) are provided on the basic unit (15) for receiving swiveling levers (10).

4. An input device according to one of the preceding claims, **characterized in that** a spring for causing the swiveling process is integrated in the basic unit (15).

5. An input device according to claim 4, **characterized in that** the spring can be unlocked mechanically by pressure on the bottom part of the input element (2).

6. An input device according to claim 5, **characterized in that** the spring can be unlocked electrically by actuating a tactile sensor (3 to 7).

7. An input device according to one of the claims 1 to 3, **characterized in that** a motor is integrated in the basic unit (15) for causing the swiveling process.

8. An input device according to claim 7, **characterized in that** the initiation of a motor start occurs by actuating a tactile sensor (4 to 7).

## Revendications

1. Appareil d'entrée d'un système de bus d'installation avec un élément d'entrée (2) ayant au moins un capteur de détection (3, 4, 5, 6, 7), qui est relié à une unité de base (15), l'élément d'entrée (2) étant relié de manière articulée par des leviers pivotants (9, 10) à l'unité de base (15), de sorte que l'élément d'entrée (2) peut être positionné sélectivement dans une position fermée et une position ouverte avec un angle de pivotement (α) prédéterminé, **caractérisé en ce que** l'élément d'entrée (2) peut être positionné selon un angle de pivotement (α) par rapport à la position verticale et **en ce qu'**une prise électrique (17) est installée dans la partie inférieure de l'unité de base (15), de sorte que la prise électrique est recouverte dans la position fermée par l'élément d'entrée (2) et qu'après le pivotement de l'élément d'entrée (2), la prise électrique (17) soit accessible et les zones de marquage des capteurs de détection soient bien visibles.

2. Appareil d'entrée selon la revendication 1, **caractérisé en ce que** l'élément d'entrée (2) est relié de manière articulée à l'unité de base (15) avec un levier pivotant inférieur (10) et un levier pivotant supérieur (9) de chaque côté.

3. Appareil d'entrée selon la revendication 1 et/ou 2, **caractérisé en ce qu'**il est prévu sur l'unité de base (15) des creux (18) destinés à recevoir des leviers pivotants (10).

4. Appareil d'entrée selon l'une des revendications précédentes, **caractérisé en ce qu'**un ressort destiné à réaliser le mouvement de pivotement est intégré dans l'unité de base (15).

5. Appareil d'entrée selon la revendication 4, **caractérisé en ce que** le ressort peut être déverrouillé mécaniquement par une pression sur le partie inférieure de l'élément d'entrée (2).

6. Appareil d'entrée selon la revendication 5, **caractérisé en ce que** le ressort peut être déverrouillé électriquement par l'actionnement d'un capteur de détection (3-7).

7. Appareil d'entrée selon l'une des revendications 1 à 3, **caractérisé en ce qu'**un moteur destiné à réaliser le mouvement de pivotement est intégré dans l'unité de base (15).

8. Appareil d'entrée selon la revendication 7, **caractérisé en ce que** le démarrage du moteur est déclenché par l'actionnement d'un capteur de détection (4-7).
